# EUROPÄISCHE PATENTSCHRIFT

(11) **EP 1 896 219 B1**
(45) Veröffentlichungstag und Bekanntmachung des Hinweises auf die Patenterteilung: **11.03.2015**
(21) Anmeldenummer: 06762152.4
(22) Anmeldetag: 23.06.2006
(51) Int. Cl.: B23B 29/00, B23Q 1/70, B23B 31/26, B25B 13/48, B25B 33/00, F16D 1/08

(54) **VERBINDUNGSSTELLE**
JOINT
POINT DE RACCORDEMENT

(30) Priorität: 24.06.2005 DE 102005029712; 10.08.2005 DE 102005038052; 10.11.2005 DE 102005049614
(43) Veröffentlichungstag der Anmeldung: 12.03.2008
(73) Patentinhaber: MAPAL Fabrik für Präzisionswerkzeuge Dr. Kress KG, D-73431 Aalen (DE)
(72) Erfinder: REINAUER, Andreas, 72505 Krauchenwies (DE)
(74) Vertreter: Gleiss, Alf-Olav
(86) Internationale Anmeldenummer: PCT/EP2006/006052
(87) Internationale Veröffentlichungsnummer: WO 2006/136430

(56) Entgegenhaltungen:
- EP-A- 0 507 147
- DE-A1- 2 053 375
- DE-A1- 4 110 720
- DE-A1- 4 117 765
- DE-A1- 4 132 019
- DE-A1- 19 525 396
- DE-A1- 19 860 747
- FR-A- 2 599 442
- US-A- 2 335 721
- US-A- 6 079 917
- US-B1- 6 264 208
- US-B1- 6 520 508

## Beschreibung

Die Erfindung betrifft eine Verbindungsstelle mit zwei jeweils eine Planstelle aufweisenden Teilwerkzeugen gemäß Oberbegriff des Anspruchs 1.

Derartige Verbindungsstellen sind beispielweise aus DE 41 32 019 A1 oder aus EP 0 507 147 A bekannt.

Verbindungsstellen der hier angesprochenen Art sind bekannt. Sie dienen dazu, jeweils zwei aneinander angrenzende Teilwerkzeuge miteinander zu verbinden, wobei hier mit dem Begriff Teilwerkzeug auch die Spindel einer Werkzeugmaschine angesprochen wird. Mit dem Begriff Verbindungsstelle wird also nicht nur die Verbindung eines Teilwerkzeugs mit einem weiteren Teilwerkzeug, eines Teilwerkzeugs mit einem Adapter oder Zwischenstück oder dergleichen, sondern auch die Verbindung zwischen einer Maschinenspindel und einem Teilwerkzeug, einer Maschinenspindel und einem Adapter oder Zwischenstück oder dergleichen angesprochen. Eines der Teilwerkzeuge ist mit einem Vorsprung versehen, der zumindest bereichsweise in eine als Aufnahme bezeichnete Ausnehmung des zweiten Teilwerkzeugs einführbar ist. Ist das Teilwerkzeug als Maschinenspindel ausgebildet, so ist die Aufnahme bei bekannten Systemen in der Regel hier vorgesehen. Der Vorsprung des zweiten Teilwerkzeugs wird hier eingeführt.

Mit der Spanneinrichtung der Verbindungsstelle wird eine Spannkraft aufgebaut, die die beiden Teilwerkzeuge in axialer Richtung fest aneinander presst, sodass die beiden Planflächen aneinander anliegen und eine exakte Lagefixierung der zu verbindenden Teile sichergestellt wird, sowohl in radialer, als auch in axialer Richtung. Die Spanneinrichtung weist eine Betätigungseinrichtung sowie mindestens zwei Spannkörper auf, die im Inneren des Vorsprungs in axialer und radialer Richtung verlagerbar untergebracht sind. Beim Verspannen der beiden Teilwerkzeuge wirken Kräfte auf die Spannkörper derart, dass diese in radialer Richtung nach außen verlagert werden. Sie stützen sich dabei an einer inneren Spannschulter auf der Innenfläche des Vorsprungs ab und auch an einem Widerlager der Spanneinrichtung. Dadurch wirken in axialer Richtung Kräfte auf den Vorsprung, die diesen in die Aufnahme hineinziehen und damit zur Verspannung der beiden Teilwerkzeuge und zur Anlage der Planflächen beitragen. Gleichzeitig wirken aber auch radiale Kräfte auf den Vorsprung, sodass dieser aufgeweitet wird und sich mit seiner Außenfläche an die Innenfläche der Aufnahme anlegt. Dieses Wirkprinzip führt dazu, dass die beiden Teilwerkzeuge der Verbindungsstelle in radialer und axialer Richtung exakt lagefixiert werden. Bei Verbindungsstellen der hier angesprochenen Art kann der auch als Hohlschaft bezeichnete Vorsprung unterschiedliche Geometrien aufweisen. Es ist also möglich, die Außenfläche des Vorsprungs zylindrisch oder konisch auszubilden. Sie kann glatt oder polygonförmig sein. Die Innenfläche der Aufnahme ist komplementär ausgebildet, sodass der Vorsprung in der Aufnahme sicheren Halt findet.

Es hat sich herausgestellt, dass die Verspannung der beiden Teilewerkzeuge im Bereich einer Verbindungsstelle in vielen Fällen aufwendig ist.

Aufgabe der Erfindung ist es daher, eine Verbindungsstelle zu schaffen, die diesen Nachteil vermeidet.

Zur Lösung dieser Aufgabe wird eine Verbindungsstelle der eingangsgenannten Art vorgeschlagen, die die in Anspruch 1 genannten Merkmale aufweist. Die Verbindungsstelle dient dazu, zwei Teilwerkzeuge lösbar miteinander zu verbinden, wobei, wie gesagt, auch eine Maschinenspindel als Teilwerkzeug im Sinne der hier vorliegenden Erfindung bezeichnet wird. Die Verbindungsstelle ist mit einer Spanneinrichtung versehen, die die beiden Teilwerkzeuge aneinander spannt, und mit einer Betätigungseinrichtung, die mindestens zwei Spannkörper umfasst. Die Betätigungseinrichtung weist ein drehbares Betätigungselement auf, dessen Drehachse unter einem Winkel zur Längsachse der Verbindungsstelle angeordnet ist, vorzugsweise unter 90°. Das Betätigungselement weist eine exzentrische Außenfläche auf, die mit einer Kopplungseinrichtung zusammenwirkt. Eine Drehung der Betätigungseinrichtung führt dazu, dass ein Kolben der Spanneinrichtung in axialer Richtung verlagert wird, was zu einer Verspannung der beiden Teilwerkzeuge der Verbindungsstelle führt. Die Verbindungsstelle ist mit den Merkmalen des Anspruchs 1 sehr einfach aufgebaut und störungsunanfällig.

Besonders bevorzugt wird ein Ausführungsbeispiel der Verbindungsstelle, das sich durch einen Spannschlüssel auszeichnet. Dieser ist gabelförmig ausgebildet und wirkt mit zwei Betätigungselementen der Betätigungseinrichtung zusammen. Mit Hilfe des Spannschlüssels können also gleichzeitig zwei Betätigungselemente aktiviert werden, was zu einer sehr gleichmäßigen Verspannung der Teilwerkzeuge der Verbindungsstelle führt.

Besonders bevorzugt wird außerdem ein Ausführungsbeispiel der Verbindungsstelle, das eine Sicherungsnut umfasst, in die ein von dem Spannschlüssel entspringender Vorsprung eingreift. Die Sicherungsnut weist an ihrem einen Ende einen Einführungsbereich auf, durch den sicher gestellt ist, dass der Spannschlüssel nur in einer bestimmten Position ansetzbar ist, um die Betätigungselemente zu aktivieren. Nur in dieser Position ist der Spannschlüssel auch wieder abziehbar. Der Einführungsbereich wird vorzugsweise so gewählt, dass der Spannschlüssel nur dann abgezogen werden kann, wenn die Betätigungselemente in einer Position angeordnet sind, in der die beiden Teilwerkzeuge der Verbindungsstelle fest miteinander verspannt sind. Es ist damit auf einfache Weise gewährleistet, dass wenn der Spannschlüssel abgezogen wird, die beiden Teilwerkzeuge auch sicher miteinander verspannt sind.

Weitere Ausgestaltungen ergeben sich aus den übrigen Unteransprüchen.

Die Erfindung wird im folgenden anhand der Zeichnung näher erläutert. Es zeigen:
- Figur 1: einen Längsschnitt durch eine Verbindungsstelle in gespanntem Zustand;
- Figur 2: einen Längsschnitt durch die Verbindungsstelle gemäß Figur 1 in gelöstem Zustand
- Figur 3: einen Längsschnitt durch die Verbindungsstelle in einer gegenüber Figur 1 geänderten Schnittebene;
- Figur 4: eine perspektivische Ansicht einer Verbindungsstelle im Teilschnitt;
- Figur 5: eine Seitenansicht einer Verbindungsstelle und
- Figur 6: eine perspektivische Ansicht einer Verbindungsstelle mit einem Spannschlüssel.

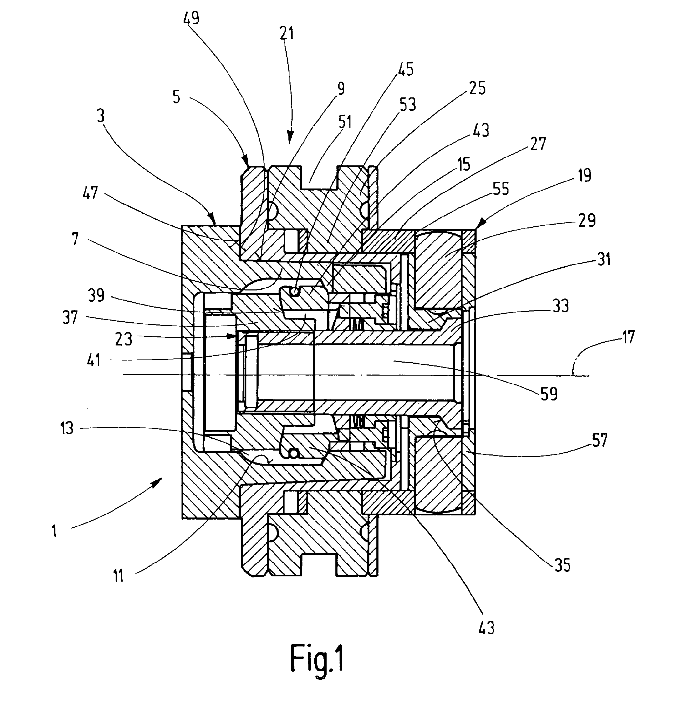

Figur 1 zeigt eine Verbindungsstelle 1 mit einem ersten Teilwerkzeug 3 und mit einem zweiten Teilwerkzeug 5. Das erste Teilwerkzeug 3 weist einen hohlen Vorsprung 7 auf, der in eine Ausnehmung 9 im zweiten Teilwerkzeug 5 zumindest bereichsweise einsteckbar ist. Es wird hier also ein Spannsystem geschaffen, mit dessen Hilfe zwei Teilwerkzeuge 3 und 5 lösbar miteinander verspannt werden. Dabei kann das zweite Teilwerkzeug 5 auch die Spindel einer Werkzeugmaschine sein, die das erste Teilwerkzeug 3 aufnimmt. Es kann aber auch ein Werkzeug, ein Adapter, ein Zwischenstück oder dergleichen sein.

Die hier dargestellte Verbindungsstelle 1 kann also Teilwerkzeuge 3 und 5 beliebiger Ausgestaltung aufweisen. Es ist für die Funktion der Verbindungsstelle 1 auch belanglos, ob das erste Teilwerkzeug 3 einen Vorsprung oder eine Ausnehmung aufweist und das zweite Teilwerkzeug entsprechend komplementär ausgebildet ist. Entscheidend ist, dass eines der Teilwerkzeuge einen Vorsprung und das andere eine zugehörige Aufnahme aufweist.

Der Vorsprung 7 des ersten Teilwerkzeugs 3 ist hohl ausgebildet. Die Innenfläche 11 des Hohlraums 13 im Vorsprung 7 weist eine innere Spannschulter 15 auf, die gegenüber einer gedachten senkrecht verlaufenden Ebene, auf der die Längsachse 17 der Verbindungsstelle 1 senkrecht steht, unter einem spitzen Winkel geneigt ist. Auch als Hohlkegel bezeichnete Vorsprünge der hier angesprochenen Art mit einer inneren Spannschulter sind bekannt, sodass hier nicht näher darauf eingegangen wird.

Die Verbindungsstelle 1 weist eine Spannvorrichtung 19 mit einer Betätigungseinrichtung 21 und mit einem Kolben 23 auf, der im Inneren der Verbindungsstelle 1 in axialer Richtung, das heißt in Richtung der Längsachse 17 oder parallel dazu mit Hilfe der Betätigungseinrichtung 21 verlagerbar ist. Der Kolben 23 ist so mit der Betätigungseinrichtung 21 gekoppelt, dass bei einer Aktivierung der Betätigungseinrichtung eine Verlagerung des Kolbens 23 erfolgt.

Die Betätigungseinrichtung 21 ist also mit dem Kolben 23 gekoppelt.

Die Betätigungseinrichtung 21 weist ein Betätigungselement 25 auf, das mit einem ersten Kopplungsglied 27 gekoppelt ist. Dieses wirkt über ein zweites Kopplungsglied 29 mit dem Kolben zusammen und optional über ein drittes Kopplungsglied 31, das vorzugsweise als Kopplungsring ausgebildet ist.

Der Kolben 23 weist an einem Ende, hier seinem rechten Ende, das dem dritten Kopplungsglied 31 zugeordnet ist, mindestens einen Vorsprung auf, der bei einer Verlagerung des dritten Kopplungsglieds 31 nach rechts mit diesem in Eingriff tritt, sodass der Kolben 23 ebenfalls nach rechts in Richtung der Längsachse 17 verlagert wird. Vorzugsweise ist an dem rechten Ende des Kolbens ein ringförmiger Kopplungssteg 33 vorgesehen, der in einer ringförmigen Ausnehmung 35 im dritten Kopplungsglied 31 eingreift.

An dem gegenüberliegenden Ende des Kolbens 23 ist ein Kopplungsring 37 vorgesehen, der an seiner Außenseite, also auf seiner der Längsachse 17 abgewandten Seite, eine Anlaufschräge 39 umfasst. Auf der Außenseite des Kolbens 23, hier in der Außenfläche des Kopplungsrings 37, sind mindestens zwei Aufnahmeschlitze 41 vorgesehen, in denen jeweils ein Spannkörper 43 der Spanneinrichtung 19 untergebracht ist.

Die Anlaufschräge 39 ist gegenüber einer gedachten Ebene, auf der die Längsachse 17 senkrecht steht, unter einem spitzen Winkel geneigt, hier nach links. An dieser Anlaufschräge 39 kann bei einer Verlagerung des Kolbens 23 nach rechts der in dem Aufnahmeschlitz 41 untergebrachte Spannkörper 43 radial nach außen, also senkrecht zur Längsachse 17 verlagert werden. Bei einer axialen Verschiebung des Kolbens 23 in Figur 1 nach rechts gleitet der Spannkörper 43 entlang der Anlaufschräge 39 radial nach außen und gelangt damit in Eingriff mit der inneren Spannschulter 15 auf der Innenfläche des als Hohlschaft ausgebildeten Vorsprungs 7. Der Spannkörper 43 wird dabei radial und auch axial in seine Spannstellung verschoben. Eine in axialer Richtung auf den Kolben 23 nach rechts wirkende Kraft wird über den Spannkörper 43 damit auf die innere Spannschulter 15 übertragen, sodass der Vorsprung 7 in die Ausnehmung 9 hineingezogen wird. Durch die radiale Auswärtsbewegung des Spannkörpers 43 findet auch eine radiale Aufweitung des Vorsprungs 7 statt, sodass sich dessen Außenfläche an die Innenfläche der Ausnehmung 9 anlegt und damit eine Ausrichtung des Vorsprungs 7 gegenüber der Ausnehmung 9 erfolgt.

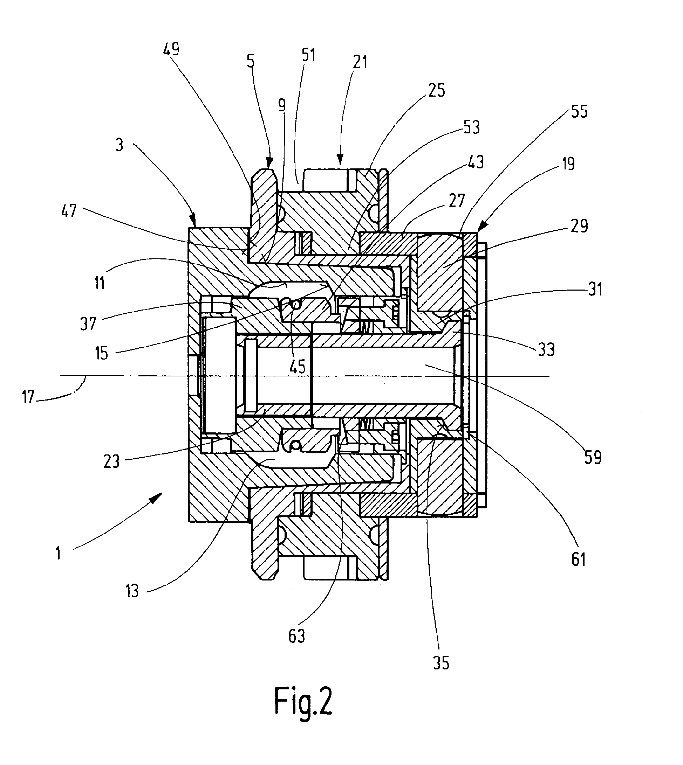

Bei dem hier dargestellten Ausführungsbeispiel der Verbindungsstelle 1 sind zwei diametral gegenüberliegende Spannkörper 43 in zugehörigen Aufnahmeschlitzen 41 vorgesehen. Die Spannkörper 43 werden vorzugsweise gegen die Kraft eines Rückstellelements 45 radial nach außen bewegt. Das heißt, bei einer entgegengesetzten Bewegung des Kolbens 23 nach links, verlagert dieses die Spannkörper 43 radial nach innen auf den Grund der Aufnahmeschlitze 41, nämlich in die Lösestellung, die anhand von Figur 2 näher erläutert wird. In dieser Position kann der Vorsprung 7 aus der Ausnehmung 9 herausgenommen werden.

Die Rückstellkraft des Rückstellelements 45 ist so an die Spannkräfte der Spannvorrichtung 19 angepasst, dass die Spannwirkung dieser Vorrichtung nicht behindert oder gar aufgehoben wird.

Die beiden Teilwerkzeuge der Verbindungsstelle 1 haben Planflächen, mit denen sie im verspannten Zustand aneinander anliegen. Aus Figur 1 ist ersichtlich, dass das erste Teilwerkzeug 3 eine Planfläche 47 aufweist, die hier als Ringfläche ausgebildet ist. Die Planfläche liegt in einer gedachten Ebene, auf der die Längsachse 17 senkrecht steht. Sie weist in Richtung auf das zweite Teilwerkzeug 5. Das zweite Teilwerkzeug 5 ist mit einer entsprechenden Planfläche 49 versehen, die ebenfalls in einer gedachten Ebene liegt, auf der die Längsachse 17 senkrecht steht. Sie weist in Richtung auf das erste Teilwerkzeug 3. Die radiale Ausdehnung der Planflächen 47 und 49 ist so gewählt, dass sie in verspanntem Zustand der Teilwerkzeuge 3 und 5 fest aneinander liegen und damit einerseits eine exakte Ausrichtung der beiden Teilwerkzeuge 3 und 5 zueinander gewährleisten, andererseits sicherstellen, dass die beiden Teilwerkzeuge 3 und 5 nicht gegeneinander verkippt sind.

Grundsätzlich ist das Spannprinzip bekannt, zwei Teilwerkzeuge einerseits mit einem als Hohlschaft ausgebildeten Vorsprung und andererseits mit einer Ausnehmung zu versehen, außerdem mit Planflächen. Beim Verspannen dieser beiden Teilwerkzeuge wird der Vorsprung in axialer Richtung in die Ausnehmung hineingezogen und aufgeweitet, sodass sich einerseits eine exakte Anlage der Außenfläche des Vorsprungs an der Innenfläche der Ausnehmung ergibt, andererseits eine exakte Anlage der Planflächen der beiden Teilwerkzeuge. Daher soll hier auf dieses Grundprinzip nicht näher eingegangen werden.

Die Verbindungsstelle 1 zeichnet sich dadurch aus, dass die Verspannung der beiden Teilwerkzeuge 3 und 5 besonders einfach möglich ist: Die Spannvorrichtung 19 weist hier zwei diametral gegenüberliegende Spannkörper 43 auf, die mittels eines Kolbens 23 gegenüber einer Längsachse 17 der Verbindungsstelle 1 radial nach außen verlagert werden können: Wird der Kolben 23 in Richtung der Längsachse 17 in Figur 1 nach rechts verlagert, so gleiten die Spannkörper 43 entlang der Anlaufschräge 39 gegenüber der Längsachse 17 radial nach außen und treten mit der inneren Spannschulter 19 des Vorsprungs 7 in Eingriff, sodass dieser in axialer Richtung nach rechts gezogen und in radialer Richtung aufgeweitet wird. Die Spannkörper sind nicht nur in radialer sondern auch in axialer Richtung verlagerbar, damit sie von der Anlaufschräge 39 gegen die innere Spannschulter 15 gepresst werden können.

Die Verlagerung des Kolbens 23 erfolgt mittels der Betätigungseinrichtung 21, nämlich durch Verdrehen des Betätigungselements 25. Vorzugsweise ist vorgesehen, dass die Verbindungsstelle 1 auf zwei gegenüberliegenden Seiten je ein Betätigungselement 25 umfasst, wie dies auch in Figur 1 dargestellt ist. Die Betätigungseinrichtung 21 ist, ebenso wie die Spannvorrichtung 19 Teil des Teilwerkzeugs, das die Ausnehmung enthält, hier also des zweiten Teilwerkzeugs 5. An dem im Bereich der Verbindungsstelle 1 festgehaltenen ersten Teilwerkzeug 3 sind also keinerlei zusätzliche Elemente vorgesehen. Das erste Teilwerkzeug 3 braucht also in keiner Weise auf die Spannvorrichtung 19 und die Betätigungseinrichtung 21 abgestimmt zu sein. Es ist lediglich erforderlich, dass der Vorsprung 7 des ersten Teilwerkzeugs 3, wie bei Hohlschaftwerkzeugen üblich, eine innere Spannschulter 15 aufweist. Da die Betätigungselemente der Betätigungseinrichtung identisch ausgebildet sind, wird im Folgenden auf das obere Betätigungselement 25 weiter Bezug genommen, das also oberhalb der Längsachse 17 angeordnet ist.

Das Betätigungselement 25 weist auf seiner der Längsachse 17 abgewandten Außenseite eine Eingriffsfläche 51 für einen hier nicht dargestellten Spannschlüssel auf. Auf diesen wird unten näher eingegangen. Das Betätigungselement 25 ist um seine Mittelachse drehbar, die hier senkrecht auf der Längsachse 17 steht. Auf seiner der Eingriffsfläche 51 abgewandten Unterseite weist es einen exzentrisch zu der Mittelachse des Betätigungselements 25 angeordneten Vorsprung 53 auf, der in eine Ausnehmung des ersten Kopplungsglieds 27 eingreift. Bei einer Drehbewegung des Betätigungselements 25 wird das Ende des Kopplungsglieds 27, in das der Vorsprung 53 einbeißt, entlang der Bahn des Vorsprungs 53 bewegt. Es führt also eine Schwenkbewegung aus. Gleichzeitig wird das erste Kopplungsglied 27 je nach Stellung des Vorsprungs 53 mehr oder weniger weit in Richtung der Längsachse 17 nach rechts oder links verlagert. Eine Drehbewegung des Betätigungselements 25 führt also zu einer Axialbewegung des ersten Kopplungsglieds 27. Diese Axialbewegung wird auf den Kolben 23 übertragen, sodass dieser in Abhängigkeit der Stellung des Betätigungselements 25 ebenfalls mehr oder weniger weit in axialer Richtung, also parallel zur Längsachse 17 nach rechts oder links, verlagert wird. In der Darstellung gemäß Figur 1 ist der Vorsprung 53 durch Drehung des Betätigungselements 25 ganz nach rechts verlagert. Entsprechend ist das erste Kopplungsglied 27 ganz nach rechts verschoben. Durch dessen Kopplung mit dem Kolben 23 ist auch dieser ganz nach rechts verlagert, sodass die Anlaufschräge 39 die Spannkörper 43 radial maximal weit nach außen verschoben hat, sodass der Vorsprung 7, wie oben erläutert, ganz in die Ausnehmung 9 hereingezogen ist und die Planflächen 47 und 49 fest aneinander anliegen.

Aus den Erläuterungen wird also deutlich, dass eine Drehbewegung des Betätigungselements 25 in eine Axialbewegung des Kolbens 23 umgesetzt wird. Hier weist das Betätigungselement 25 einen exzentrischen Vorsprung 53 auf. Denkbar wäre es aber auch, dass es auf seiner der Eingriffsfläche 51 abgewandten Unterseite einen ovalen Vorsprung aufweist, der in einer Ausnehmung im ersten Kopplungsglied 27 untergebracht ist und dieses mit seiner Außenfläche bei einer Drehung des Betätigungselements 25 mehr oder weniger weit axial verlagert.

Aus den Erläuterungen ergibt sich, dass durch geeignete Ausgestaltung des ersten Kopplungsglieds 27 die Drehbewegung des Betätigungselements 25 unmittelbar in eine Axialbewegung des Kolbens umsetzbar ist. Bei dem hier dargestellten Ausführungsbeispiel weist das erste Kopplungsglied 27 an seinem dem Vorsprung 53 gegenüberliegenden Ende eine Ausnehmung 55 für das zweite Kopplungsglied 29 auf, das hier als zylindrischer Stift ausgebildet ist, der in der Ausnehmung 55 eingreift und der im Wesentlichen senkrecht zur Längsachse 17 der Verbindungsstelle 1 verläuft. Das zweite Kopplungsglied 29 wird bei einer Axialbewegung des ersten Kopplungsglieds 27 ebenfalls in Richtung der Längsachse 17 hin und her bewegt. Der Stift könnte unmittelbar in den Kolben 23 eingreifen. Hier ist jedoch ein drittes Kopplungsglied 31 vorgesehen, das ringförmig ausgebildet ist und eine Bohrung zur Aufnahme des zweiten Kopplungsglieds 29 beziehungsweise des Stifts aufweist. Das ringförmige dritte Kopplungsglied 31 ist konzentrisch zur Längsachse 17 angeordnet und umgibt dem Kolben 23. Der Innendurchmesser des dritten Kopplungsglieds ist so gewählt, dass der Kolben umschlossen wird. In seiner Innenfläche, in Figur 1 rechts, weist das ringförmige dritte Kopplungsglied 31 eine Ausnehmung 35 auf, in die ein Kopplungssteg 33 des Kolbens 23 eingreift. Durch eine Abschlussplatte 57, die am dritten Kopplungsglied 31 befestigt ist, wird verhindert, dass der Kopplungssteg 33 nach rechts aus der Ausnehmung 35 herausgleiten kann. Die nach rechts in Richtung zur Abschlussplatte 57 gerichtete Innenwand der Ausnehmung 35 erfasst den Kopplungssteg 33 dergestalt, dass bei einer Verlagerung des dritten Kopplungsglieds 31 nach rechts der Kopplungssteg 3 mit einer nach rechts gerichteten Kraft beaufschlagt und der Kolben 23 in axialer Richtung nach rechts bewegt wird.

Die Berührungsfläche der Ausnehmung 35 ist vorzugsweise kugelförmig ausgebildet, um axiale Fluchtungsfehler ausgleichen zu können.

Figur 1 zeigt noch, dass der Kolben 23 hohl ist und einen Durchlass 59 aufweist, durch den ein Kühl-/Schmiermittel geleitet werden kann.

Figur 2 zeigt die Verbindungsstelle 1 in entspanntem beziehungsweise gelöstem Zustand: Die Spannkörper 43 sind radial nach innen in Richtung auf die Längsachse 17 verlagert und liegen damit in den Aufnahmeschlitzen 41 des Kopplungsrings 37 und berühren den Vorsprung 7, insbesondere dessen innere Spannschulter 15 nicht. Gleiche Teile sind mit gleichen Bezugsziffern versehen, sodass insofern auf die Beschreibung zu Figur 1 verwiesen wird.

Zum Lösen der Verbindungsstelle 1 wird das Betätigungselement 25 so verdreht, dass das erste Kopplungsglied 27 ganz nach links verlagert wird, damit auch der Kolben 23. Nach links gerichtete Kräfte werden von der am zweiten Kopplungsglied 29 angebrachten Abschlussplatte 57 aufgebracht, die auf den Kopplungssteg 33 des Kolbens 23 drückt, diesen damit nach links verlagert. Mit dem Kolben 23 wird auch der an dem Kolben 23 befestigte Kopplungsring 37 nach links bewegt und mit diesem dessen Anlaufschräge 39. Damit wird der Spannkörper 43 freigegeben. Er kann nun von dem Rückstellelement 45 radial nach innen in Richtung auf die Längsachse 17 verlagert werden.

Es ist grundsätzlich auch möglich, wie hier in den Figuren dargestellt, den Kopplungssteg 33 in der im ringförmigen dritten Kopplungsglied 31 vorgesehenen Ausnehmung 35 durch einen in die Innenfläche des dritten Kopplungsglieds 31 eingesetzten Spannring 61 zu halten. In diesem Fall überträgt der Spannring 61 axiale Kräfte auf den Kolben 23, die in Richtung der Längsachse 17 nach links wirken.

Aus Figur 2 ist noch ersichtlich, dass auf der der Anlaufschräge 39 gegenüberliegenden Seite des Spannkörpers 43 eine Schrägfläche 63 vorgesehen ist, die gegenüber einer gedachten Ebene, auf der die Längsachse 17 senkrecht steht, geneigt ist, und zwar in entgegengesetzter Richtung wie die Anlaufschräge 39. Die Schrägfläche ist am zweiten Teilwerkzeug 5 vorgesehen, sodass bei einer Verlagerung des Kolbens 22 nach rechts diese Schrägfläche 63 feststeht, während die Anlaufschräge 39 in Richtung auf die Schrägfläche 63 bewegt wird. Die Schrägfläche 63 kann auch an einem in axialer Richtung federnd gelagerten Ring vorgesehen werden, der den Kolben 23 umgibt. Die Spannkörper 43 liegen also zwischen V-förmigen Flächen, die sich von der Längsachse 17 aus gesehen nach außen öffnen. Wenn sich diese beiden Flächen aufeinanderzubewegen, wird der Spannkörper 43 besonders leicht radial nach außen von der Längsachse 17 wegbewegt und gelangt damit in die in Figur 1 dargestellte Verspannungsposition.

In dem gelösten Zustand der Verbindungsstelle 1 befinden sich die Planflächen 47 und 49 des ersten und zweiten Teilelements 2, 5 in einem Abstand und tragen damit zu einer Ausrichtung der beiden Teilwerkzeuge nichts bei.

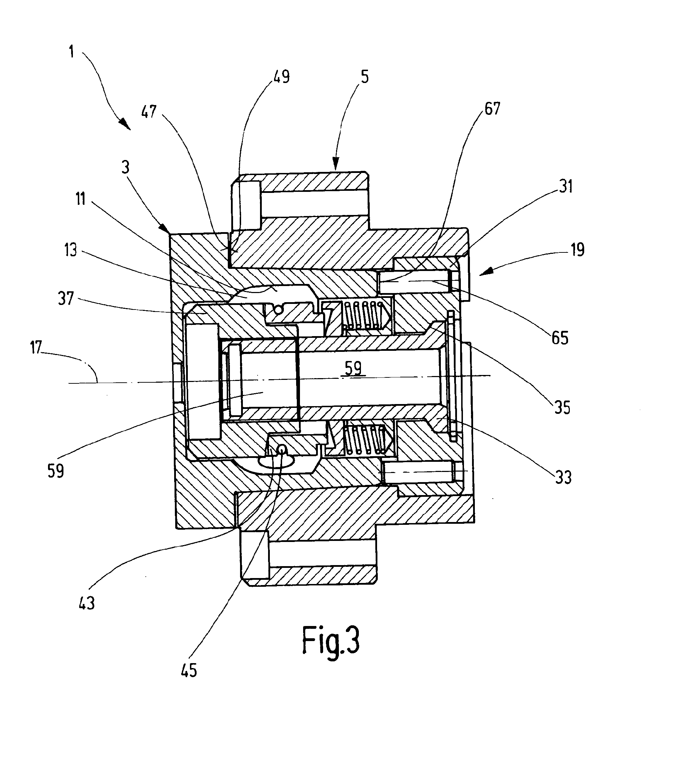

Figur 3 zeigt die Verbindungsstelle 1, 2 und 3 im Längsschnitt. Allerdings ist hier die Schnittebene gegenüber den Darstellungen in Figur 1 und 2 um die Längsachse 17 verdreht. Gleiche Teile sind mit gleichen Bezugsziffern versehen, sodass insofern auf die Erläuterungen zu Figur 1 und 2 verwiesen wird. Aus der Darstellung gemäß Figur 3 wird deutlich, dass die Spannvorrichtung 19 so ausgelegt werden kann, dass das erste Teilwerkzeug 3 im entspannten Zustand der Verbindungsstelle 1 aus dem zweiten Teilwerkzeug 5 herausgeschoben wird. Bevorzugt wird eine sehr einfache konstruktive Lösung: in das zweite Kopplungsglied 29 ist ein Abdrückelement 65 eingebracht, das vorzugsweise als Schraube ausgebildet ist. Es ragt so weit aus dem zweiten Kopplungsglied 29 nach links in Richtung auf den Vorsprung 7, dass es in entspanntem Zustand auf die innere Stirnfläche 67 des Vorsprungs 7 drückt und diesen etwas aus der Ausnehmung 9 herausschiebt.

Es zeigt sich hier, dass bei einer entsprechenden Aktivierung des Betätigungselements 25 das zweite Kopplungsglied 29 in Richtung der Längsachse 17 nach links verlagert wird, also in Richtung auf den Vorsprung 7. Das Abdrückelement 65 ragt so weit in Richtung auf den Vorsprung 7, dass dieser bei einer Bewegung des zweiten Kopplungsglieds 29 ganz nach links in seine Löseposition aus der Ausnehmung 9 so weit herausgeschoben wird, dass die Planflächen 27 und 29 nicht mehr aneinander liegen und insbesondere Reibungskräfte zwischen der Außenfläche des Vorsprungs 7 und der Innenfläche der Ausnehmung 9 überwunden werden. Das erste Teilwerkzeug 3 kann also nach dem Lösen der Verbindungsstelle 1 leicht vom zweiten Teilwerkzeug 5 getrennt werden.

Die Anzahl der Abdrückelemente ist frei wählbar. Um ein Verkanten des Vorsprungs 7 in der Ausnehmung 9 zu verhindern, sind vorzugsweise drei auf einem gedachten Kreis um die Längsachse 17 angeordnete Abdrückelemente 65 dieser Art vorgesehen.

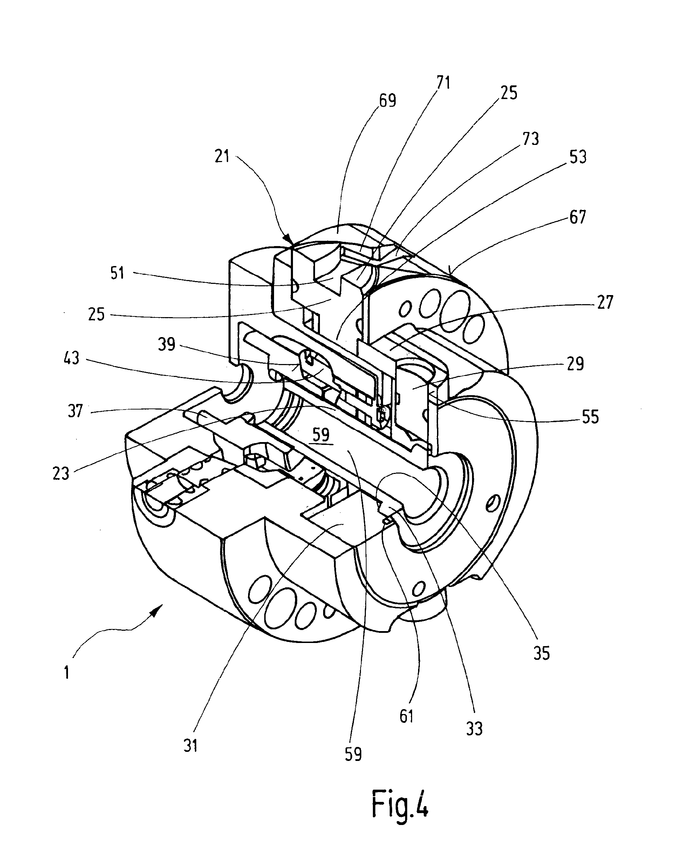

Figur 4 zeigt die Verbindungsstelle 1 in perspektivischer Ansicht. Zur besseren Übersichtlichkeit sind Teile der Verbindungsstelle, hier ein Viertel der Verbindungsstelle 1 in Längsrichtung herausgeschnitten. Gleiche Teile sind mit gleichen Bezugsziffern versehen, sodass insofern auf die Beschreibung zu den vorangegangenen Figuren verwiesen wird, um Wiederholungen zu vermeiden.

Deutlich erkennbar ist hier ein Teil der Umfangsfläche 67 der Verbindungsstelle 1 in die ein Betätigungselement 25 der Betätigungseinrichtung 21 eingesetzt ist. Das Betätigungselement ist hier wie in den Figuren 1 bis 3 im Längsschnitt dargestellt und befindet sich in der Verspannungsposition, wie sie auch in Figur 1 wiedergegeben ist.

An der Außenfläche des Betätigungselements 25 ist die Eingriffsfläche 51 des Betätigungselements 25 erkennbar. Es wird auch ersichtlich, dass die im Wesentlichen zylindrische Umfangsfläche 67 des zweiten Teilwerkzeugs 5 eine Abflachung 69 mit einer Sicherheitsnut 71 umfasst. Bei der perspektivischen Ansicht gemäß Figur 4 wird auch ein Einführbereich 73 der Sicherheitsnut 71 deutlich.

Figur 4 zeigt das erste Kopplungsglied 27 im Längsschnitt. Es weist ein erstes Ende mit einer Ausnehmung auf, in die der Vorsprung 53 des Betätigungselements 25 eingreift. Das erste Kopplungsglied 27 ist hier als streifenförmiges Element ausgebildet, an dessen anderen Ende die Ausnehmung 55 für das als Stift ausgebildete zweite Kopplungsglied 29 vorgesehen ist. Dieser greift in das ringförmige dritte Kopplungsglied 31 ein, von dem ein Kreissegment ausgeschnitten ist, das sich über 90° erstreckt.

Bei dieser Darstellung wird deutlich, dass das dritte Kopplungsglied 31 eine Ausnehmung 35 aufweist, in die der Kopplungssteg 33 eingreift. Diese Darstellung gemäß Figur 4 zeigt auch, dass das dritte Kopplungsglied 31 sich bis zur Stirnseite des zweiten Teilwerkzeugs 5 erstrecken kann und damit auch eine Abschlussplatte 57, wie sie anhand von Figur 1 erwähnt wurde, entfallen kann. Der Kopplungssteg 33, der Teil des Kolbens 23 ist, kann nicht nach vorne aus dem dritten Kopplungsglied 31 herausrutschen, weil hier ein Spannring 61 vorgesehen ist, der eine Bewegung des Kopplungsstegs 33 nach vorne aus dem dritten Kopplungsglied 31 heraus verhindert.

Aus Figur 4 wird das Grundprinzip der Verbindungsstelle 1 noch einmal ersichtlich: Eine Drehbewegung des Betätigungselments25 der Betätigungseinrichtung 21 führt zu einer Drehbewegung des Vorsprungs 53. Da dieser exzentrisch zur Mittelachse des Betätigungselements 25 liegt, wird das erste Kopplungsglied 27 einerseits um das stiftförmige zweite Kopplungsglied 29 verschwenkt, andererseits in axialer Richtung verlagert, nach der Darstellung gemäß Figur 1 nach rechts zum Verspannen der Verbindungsstelle 1 und nach links zum Lösen derselben.

Das erste Kopplungsglied 27 kann also ein langgestrecktes Element ausreichender Festigkeit sein, beispielsweise aus Metall bestehen, und im Wesentlichen parallel zur Längsachse 17 der Verbindungsstelle 1 angeordnet sein. Die Kopplung zwischen dem ersten und dritten Kopplungsglied 27 und 31 erfolgt durch den senkrecht zur Längsachse 17 erfolgenden Stift, nämlich das zweite Kopplungsglied 29.

Aus den Figuren 1 bis 4 wird folgendes Grundprinzip deutlich: Die Betätigungselemente 25 der Betätigungseinrichtung 21 liegen relativ nah an der Planfläche 49 des zweiten Teilelements 5. Die zur Verlagerung des Kolbens 23 erforderlichen Kräfte werden in dessen rechtes Ende, das in Figur 4 auf den Betrachter zugewandt ist, eingeleitet, nämlich in den Kopplungssteg 33. Dieser wird daraufhin in axialer Richtung hin und her verlagert, um die Spannkörper 43 in ihre verspannte Stellung oder in ihre Lösestellung zu verlagern. Die für die Betätigung der Spannkörper 43 erforderlichen Kräfte werden also von rechts in den Kolben 23 eingeleitet, wie dies bei herkömmlichen Verbindungsstellen der Fall ist.

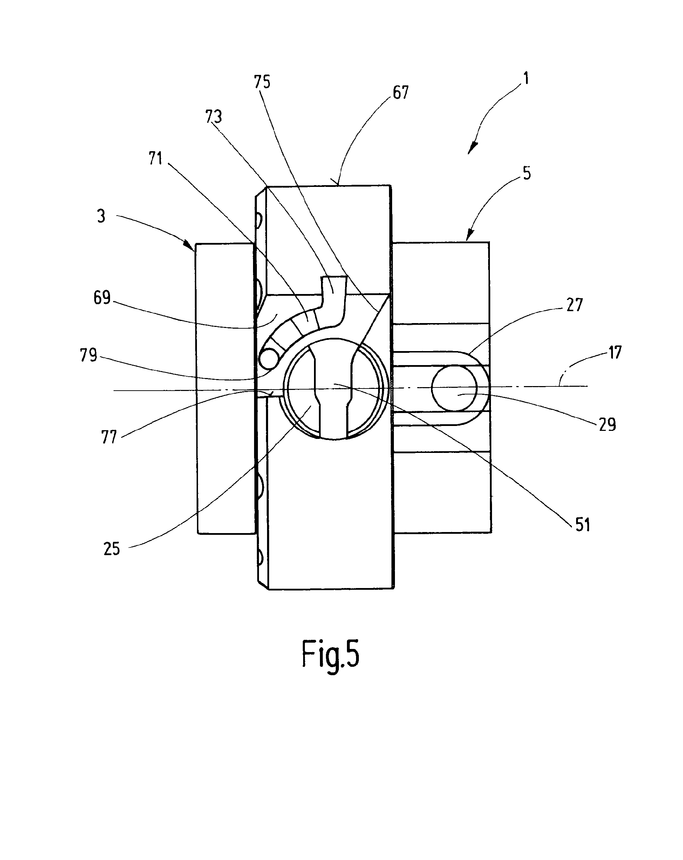

Figur 5 zeigt eine Ansicht der Verbindungsstelle 1, nämlich eine Draufsicht auf die Abflachung 69, in die die Sicherheitsnut 71 eingebracht ist. Deutlich erkennbar ist auch der Einführungsbereich 73 der Sicherheitsnut 71.

Die Abflachung 69 im Grundkörper des zweiten Teilwerkzeugs 5, die aus der Umfangsfläche 67 herausgearbeitet ist, weist oben rechts einen ersten Anschlag 75 und unten links einen zweiten Anschlag 77 auf, die durch Seitenwände der Abflachung 69 in der Umfangsfläche 67 des zweiten Teilwerkzeugs 5 gebildet werden.

In der Darstellung gemäß Figur 5 fluchtet der Einführbereich 73 im Wesentlichen mit der Eingriffsfläche 51 im Betätigungselement 25. Es ist also möglich, bei der Ansicht gemäß Figur 5 von oben einen Spannschlüssel in die Eingriffsfläche 51 einzuführen, der hier nicht dargestellt ist. Ein auf der dem zweiten Teilwerkzeug 5 zugewandten Unterseite des Spannschlüssels ist ein Vorsprung oder ein Stift vorgesehen, der beim Einführen des Spannschlüssels in die Eingriffsfläche 51 in den Einführbereich 73 eingebracht wird.

Wird der Spannschlüssel bei der Darstellung gemäß Figur 5 nach links gegen den Uhrzeigersinn gedreht, so dreht dieser durch den Eingriff in die Eingriffsfläche 51 das Betätigungselement 25 ebenfalls gegen den Uhrzeigersinn. Gleichzeitig wandert der Vorsprung oder der Stift des Spannschlüssels in der Sicherheitsnut 71 gegen den Uhrzeigersinn.

In Figur 5 ist durch quer zum Verlauf der Sicherheitsnut 71 angeordnete Striche angedeutet, dass die Tiefe der Nut nicht konstant ist. Sie nimmt vom Einführbereich 73 bis zum gegenüberliegenden Endabschnitt 79 zu. Der Spannschlüssel ist so ausgelegt, dass der von ihm ausgehende Vorsprung oder Stift gegen den Grund der Sicherheitsnut 71 angedrückt wird. Dies wird durch eine Vorspannung des Spannschlüssels erreicht.

Aus der Draufsicht gemäß Figur 5 ist die Kontur des ersten Kopplungsglieds 27 erkennbar, dessen erstes Ende unter dem Betätigungselement 25 angeordnet ist und dessen zweites Ende nach rechts unter dem Betätigungselement 25 hervorragt und das stiftförmige Kopplungsglied 29 aufnimmt. Aus der Darstellung gemäß Figur 5 wird deutlich, dass in der hier dargestellten Position des Betätigungselements 25, in der die Teilwerkzeuge 3 und 5 der Verbindungsstelle 1 miteinander verspannt sind, das erste Kopplungsglied 27 im Wesentlichen parallel zur Längsachse 17 der Verbindungsstelle 1 angeordnet ist.

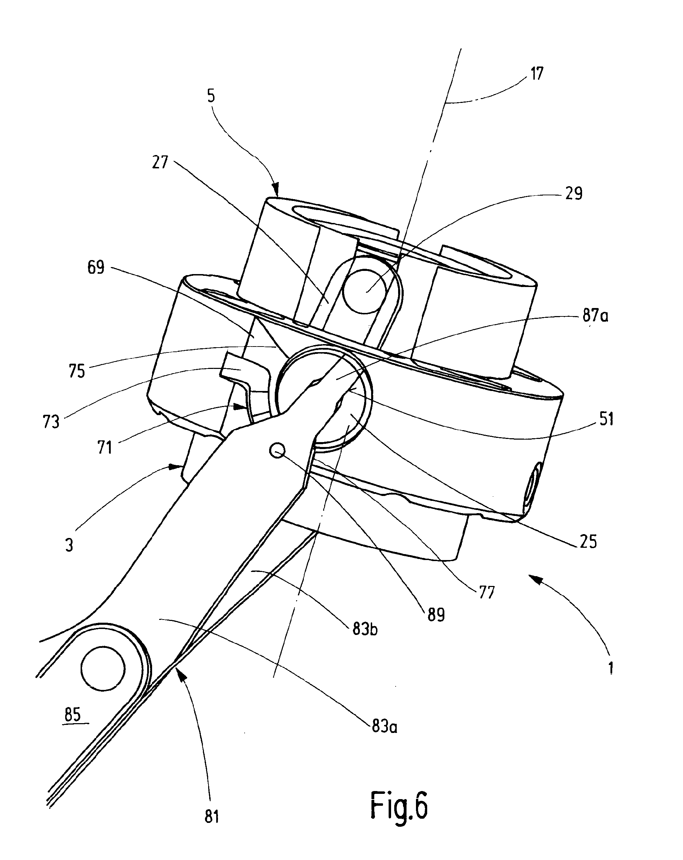

Figur 6 zeigt die Verbindungsstelle 1 in perspektivischer Ansicht, wobei die Abflachung 69 wiederum praktisch in Draufsicht wiedergegeben ist. Gleiche Teile sind mit gleichen Bezugsziffern versehen, sodass insofern auf die Beschreibung der vorangegangenen Figuren verwiesen wird.

Wesentlich ist, dass hier in Figur 6 der Spannschlüssel 81 dargestellt ist, der gabelförmig ausgebildet ist, das heißt, zwei V-förmige Schlüsselarme 83a und 83b aufweist, die von einem Griffelement 85 ausgehen. Die Schlüsselarme weisen an ihren Enden Eingriffsnasen auf, von denen hier die Eingriffsnase 87a des Schlüsselarms 83a ersichtlich ist. Diese liegt in der Eingriffsfläche 51 des Betätigungselements 21 und wird durch die Vorspannkraft der Schlüsselarme 83a und 83b in diese hineingedrückt. Entsprechend wird eine am Schlüsselarm 83b vorgesehene Eingriffsnase in die entsprechende Eingriffsfläche des gegenüberliegenden Betätigungselements 25 hineingedrückt.

Von den Schlüsselarmen 83a, 83b entspringt jeweils ein Vorsprung oder Stift 89, der so angeordnet ist, dass er in der Sicherheitsnut 71 angeordnet ist. Ist die Eingriffsfläche 51 wie in Figur 5 dargestellt angeordnet, verläuft sie also in Umfangsrichtung der Verbindungsstelle 1, kann die Eingriffsnase 87 in die Eingriffsfläche 51 eingeführt werden, während gleichzeitig der Vorsprung, Steg oder Stift 89 in den Einführungsbereich 73 der Sicherheitsnut 71 eingeführt wird. Bei einer Drehung des Spannschlüssels 81 gegen den Uhrzeigersinn schlägt dessen Außenseite schließlich an dem Anschlag 77 der Abflachung 69 an, wodurch also der Schwenkbewegungsweg des Spannschlüssels 81 begrenzt wird. In dieser Stellung des Spannschlüssels 81 ist das Betätigungselement 25 gegen den Uhrzeigersinn verdreht, damit auch dessen hier nicht sichtbarer Vorsprung. Es wird aber aus der Draufsicht gemäß Figur 6 deutlich, dass das erste Kopplungsglied 27 um das stiftförmige zweite Kopplungsglied 29 etwas verschwenkt ist, also nicht mehr parallel zur Längsachse 17 der Verbindungsstelle verläuft.

In dieser Funktionsstellung des Betätigungselements 25 sind das erste Kopplungsglied 27, damit auch das zweite Kopplungsglied 29 und das dritte Kopplungsglied 31, maximal hier nach unten, in Figur 2 nach links, verlagert. Damit befindet sich der Kolben 23 in seiner Entriegelungs- beziehungsweise Löseposition.

Die Sicherungsnut 71 ist so ausgelegt, dass sie in ihrem Endabschnitt 79, der hier durch den Schlüsselarm 83a verdeckt ist, am tiefsten ist. Da die beiden V-förmig auseinanderlaufenden Schlüsselarme 83a und 83b mit einer Vorspannkraft in Richtung auf die Verbindungsstelle 1 gedrückt werden, gleitet der Stift 89 auf dem Grund der Sicherungsnut 71 und erreicht deren tiefsten Punkt, wenn der Spannschlüssel 81 die Löse- beziehungsweise Öffnungsposition erreicht hat.

Wird nun der Spannschlüssel 81 im Uhrzeigersinn verschwenkt, so gleitet der Stift 89 wiederum auf dem Grund der Sicherungsnut 71 entlang. Da die Nut zum Einführungsbereich 73 flacher wird, wird der Stift 89 gegen die Vorspannkraft des zugehörigen Schlüsselarms nach außen gedrückt. Es ist also nur möglich, den Spannschlüssel im Uhrzeigersinn zu verschwenken, wenn die Widerstandskraft des durch den Stift 89 und den Grund der Sicherungsnut 71 gebildeten Keilgetriebes überwunden wird.

Der Spannschlüssel 81 wird also durch das Zusammenspiel der mit einer Vorspannkraft beaufschlagten Stifte 89 mit dem Grund der Sicherungsnut 71 in seiner geöffneten Stellung gehalten. Er ist im Übrigen auch nicht abziehbar, weil die Sicherungsnut im Bereich ihres Endabschnitts 79 seitlich geschlossen ist und der Stift 89 nicht seitlich aus der Sicherungsnut 71 herausgezogen werden kann.

Erst wenn der Spannschlüssel 81 im Uhrzeigersinn so weit verdreht wird, dass seine Außenseite an dem ersten Anschlag 75 anliegt, befindet sich der Stift 89 im Einführbereich 73 der Sicherungsnut 71. In dieser Position kann der Spannschlüssel 81 von der Verbindungsstelle 1 in deren Umfangsrichtung, also senkrecht zur Längsachse 17, abgezogen werden.

Es ist also nötig, die Betätigungselemente 25 einer Betätigungseinrichtung erst in ihre Spannposition zu verdrehen, indem der Spannschlüssel 81 im Uhrzeigersinn verschwenkt wird, bevor dieser von der Verbindungsstelle 1 abziehbar ist.

Es ergibt sich damit auf einfache Weise eine optimale Sicherungsfunktion: Der Spannschlüssel 81 kann nur dann von der Verbindungsstelle 1 abgezogen werden, wenn die Betätigungselemente 25 um einen gewünschten Drehwinkel verdreht und der Spannschlüssel 81 um einen vorgegebenen Schwenkwinkel verschwenkt ist und die Betätigungseinrichtung 21 sich in Verriegelungsposition befindet. Es ist also nicht möglich, den Spannschlüssel 81 abzuziehen, wenn die beiden der Verbindungsstelle 1 zugeordneten Teilwerkzeuge 3 und 5 nicht vollständig miteinander verspannt sind.

Da der Spannschlüssel 81 zwei Schlüsselarme 83a und 83b aufweist, werden die Spannkräfte symmetrisch in die Verbindungsstelle 1 eingeleitet, wodurch die Komponenten des Spannsystems beziehungsweise der Verbindungsstelle gleichmäßig belastet werden. Durch die symmetrische Anordnung der Schlüsselarme 83a, 83b wird auch eine synchrone Bewegung der Betätigungselemente 25 und der Kopplungsglieder 27, 29 und 31 erreicht, damit auch eine synchrone Bewegung der Spannkörper 43. Dies führt zu einer gleichmäßigen Krafteinleitung in die Verbindungsstelle 1.

Der Antrieb der Betätigungseinrichtung mit den Koppelgliedern kann auch über ein Gewinde als Schraubenantrieb oder über einen geometrischen Kurvenverlauf beziehungsweise über eine Anlaufschräge realisiert werden. Dabei entfallen dann die Betätigungselemente 25. Es besteht auch die Möglichkeit, die Verbindungsstelle durch eine konstruktive Änderung halbautomatisch zu betreiben, zum Beispiel hydraulisch, elektronisch oder pneumatisch.

Die anhand der Figuren 1 bis 6 erläuterte Verbindungsstelle 1 zeichnet sich durch einen sehr einfachen Aufbau aus. Die Betätigungselemente 25 sind symmetrisch im zweiten Teilwerkzeug 5 untergebracht, sodass sie mit einem einfachen Spannschlüssel 71 aktiviert werden können, der zwei Schlüsselarme 83a, 83b aufweist. Durch die Sicherungsnut 71 ist gewährleistet, dass der Spannschlüssel 81 nur in einer bestimmten Drehposition der Betätigungselemente 25 in deren Eingriffsfläche 51 eingeführt werden kann. Gleichzeitig ist gewährleistet, dass nur in der verspannten Stellung der beiden Teilwerkzeuge 3 und 5 der Verbindungsstelle 1 der Spannschlüssel 81 wieder abgezogen werden kann. Es ist also nicht möglich, die beiden Teilwerkzeuge 3 und 5 ineinanderzufügen und das Verspannen der Verbindungsstelle 1 zu vergessen. Im gelösten Zustand ist nämlich der Spannschlüssel 81 nicht abnehmbar und signalisiert eindeutig, dass die Verbindungsstelle 1 noch nicht verriegelt ist.

Durch die speziell ausgestaltete Tiefe der Sicherungsnut 71 ist sichergestellt, dass der Spannschlüssel 81 nicht ungewollt in die Verriegelungsposition fallen kann, beispielsweise aufgrund von Schwerkraft. Es ist vielmehr erforderlich, den Spannschlüssel 81 gegen die in Richtung auf die Verbindungsstelle 1 wirkende Vorspannkraft der Schlüsselarme 83a, 83b in die Verriegelungsstellung zu verschwenken.

Aus den Erläuterungen zum Grundprinzip der Verspannung und Entriegelung der Verbindungsstelle 1 wird deutlich, dass die Außenkontur des Vorsprungs 7 und die Innenkontur der Ausnehmung 9 frei wählbar ist. In beiden Fällen können also zylindrische und konische Konturen eingesetzt werden, aber auch polygonförmige Flächen, die im Wesentlichen zylindrisch oder konisch verlaufen.

In allen Fällen ist gewährleistet, dass durch die Spannvorrichtung 19 eine Drehbewegung der Betätigungselemente 25 der Betätigungseinrichtung 21 in eine axiale Bewegung des Kolbens 21 umgesetzt wird, sodass die Spannkörper 43 in ihre Verriegelungs- oder Lösestellung gelangen. Im verspannten Zustand liegen die Planflächen 47 und 49 der Teilwerkzeuge 3 und 5 fest aneinander, sodass eine optimale Ausrichtung der der Verbindungsstelle 1 zugeordneten Teilwerkzeuge 3, 5 gewährleistet ist.

Das Grundprinzip der Umsetzung einer Drehbewegung der Betätigungselemente 25 in eine Axialbewegung des Kolbens 23 erlaubt es, die Umsetzung der Drehbewegung in die Axialbewegung auf verschiedene Weise zu realisieren. Es ist beispielsweise möglich, dass ein mit dem Betätigungselement 25 zusammenwirkendes erstes Kopplungsglied unmittelbar eine Verlagerung des Kolbens 23 in axialer Richtung, das heißt in Richtung der Längsachse 17 bewirkt. Es ist aber, ohne dass der Konstruktionsaufwand deutlich erhöht würde, möglich, auch zweite und dritte Kopplungsglieder 29 und 31 vorzusehen, um die Drehbewegung der Betätigungselemente 25 in eine Axialbewegung des Kolbens 23 umzusetzen.

Es wird im Übrigen deutlich, dass das zweite Teilwerkzeug 5 ohne weiteres in bestehende Werkzeugsysteme integriert werden kann, weil es sehr wohl in der Lage ist, Vorsprünge 7 von ersten Teilwerkzeugen 3 aufzunehmen, die wie bei bekannten Werkzeugsystemen ausgestaltet sind.

## Patentansprüche

1. Verbindungsstelle mit zwei jeweils eine Planfläche (47,49) aufweisenden Teilwerkzeugen (3,5), von denen eines eine Ausnehmung (9) und eines einen zumindest teilweise in die Ausnehmung (9) einführbaren hohlen Vorsprung (7) aufweist, und mit einer Spanneinrichtung (19) zur Erzeugung einer Spannkraft, mit der die Teilwerkzeuge (3,5) in verspanntem Zustand in Bereich ihrer Planflächen (47,49) aneinander pressbar sind, wobei die Spanneinrichtung (19) eine Betätigungseinrichtung (21) sowie mindestens zwei Spannkörper (43) umfasst, die im Inneren des Vorsprungs (7) in axialer und radialer Richtung der Verbindungsstelle (1) verlagerbar untergebracht sind und in verspanntem Zustand auf eine innere Spannschulter (15) des Vorsprungs (7) wirken, und wobei die Spanneinrichtung (19) einen im Inneren des Vorsprungs (7) angeordneten, in Längsrichtung der Verbindungsstelle (1) verlagerbaren Kolben (23) aufweist, der über eine Kopplungseinrichtung (27,29,31) mit der Betätigungseinrichtung (21) so koppelbar ist, dass er in einer ersten Funktionsstellung der Betätigungseinrichtung (21) in seiner Spannstellung und in einer zweiten Funktionsstellung der Betätigungseinrichtung (21) in seiner Lösestellung angeordnet ist, und wobei die Betätigungseinrichtung (21) mindestens ein drehbares Betätigungselement (25) aufweist, dessen Drehachse unter einem Winkel von vorzugsweise 90° zur Längsachse (17) der Verbindungsstelle (1) drehbar ist und eine exzentrische Außenfläche aufweist, die mit der Kopplungseinrichtung so zusammenwirkt, dass eine Drehung des Betätigungselements (25) eine Axialbewegung des Kolbens (23) bewirkt, **dadurch gekennzeichnet, dass** die Kopplungseinrichtung ein mit der Betätigungseinrichtung zusammenwirkendes erstes Kopplungsglied (27) aufweist, das bei einer Drehung des Betätigungselements (25) in axialer Richtung verlagert wird, und dass die Kopplungseinrichtung ein zweites Kopplungsglied (29) aufweist.

2. Verbindungsstelle nach Anspruch 1, **dadurch gekennzeichnet, dass** das Betätigungselement (25) einen Exzenter aufweist.

3. Verbindungsstelle nach Anspruch 1, **dadurch gekennzeichnet, dass** das Betätigungselement (25) eine ovale Außenfläche aufweist.

4. Verbindungsstelle nach einem der Ansprüche 1 bis 3, **dadurch gekennzeichnet, dass** die Kopplungseinrichtung ein drittes Kopplungsglied (31) aufweist.

5. Verbindungsstelle nach Anspruch 4, **dadurch gekennzeichnet, dass** das zweite Kopplungsglied (29) einen mit dem ersten Kopplungsglied (27) und mit dem Kolben (23) oder mit dem dritten Kopplungsglied (31) zusammenwirkenden Stift aufweist.

6. Verbindungsstelle nach Anspruch 5, **dadurch gekennzeichnet, dass** die Mittelachse des Stifts im Wesentlichen senkrecht zur Längsachse (17) der Verbindungsstelle (1) verläuft.

7. Verbindungsstelle nach einem der vorhergehenden Ansprüche 4 bis 6, **dadurch gekennzeichnet, dass** das dritte Kopplungsglied (31) als Kopplungsring ausgebildet ist.

8. Verbindungsstelle nach einem der vorhergehenden Ansprüche, **dadurch gekennzeichnet, dass** das erste Kopplungsglied (27) als Kopplungselement ausgebildet ist, das im Wesentlichen parallel zur Längsachse (17) der Verbindungsstelle (1) ausgerichtet und an seinem einen Ende mit dem Betätigungselement (25) und an seinem anderen Ende mit dem Stift gekoppelt ist, wobei es um den Stift schwenkbar ist.

9. Verbindungsstelle nach einem der vorhergehenden Ansprüche, **dadurch gekennzeichnet, dass** das Betätigungselement (25) eine Eingriffsfläche (51) für einen Spannschlüssel (81) aufweist.

10. Verbindungsstelle Anspruch 9, **dadurch gekennzeichnet, dass** die Eingriffsfläche (51) auf der der Längsachse (17) der Verbindungsstelle (1) abgewandten Außenseite des Betätigungselements (25) vorgesehen ist.

11. Verbindungsstelle nach Anspruch 9 oder 10, **dadurch gekennzeichnet, dass** der Spannschlüssel (81) gabelförmig ausgebildet ist, und dass die Schlüsselarme (83a,83b) des Spannschlüssels (81) vorzugsweise mit einer Vorspannkraft beaufschlagt werden.

12. Verbindungsstelle nach einem der vorhergehenden Ansprüche, **dadurch gekennzeichnet, dass** eine Sicherungsnut (71) vorgesehen ist, in die ein von dem Spannschlüssel (81) entspringender Vorsprung eingreift.

13. Verbindungsstelle nach Anspruch 12, **dadurch gekennzeichnet, dass** die Sicherungsnut (71) an seinem einen Ende einen Einführbereich (73) aufweist, sodass der Spannschlüssel (81) nur in einer bestimmten Position ansetz- und entfernbar ist.

14. Verbindungsstelle nach Anspruch 12 oder 13, **dadurch gekennzeichnet, dass** die Sicherungsnut (71) Bereiche verschiedener Tiefe aufweist.

15. Verbindungsstelle nach einem der vorhergehenden Ansprüche 12 bis 14, **dadurch gekennzeichnet, dass** die Sicherungsnut (71) an ihrem anderen Ende (79) am tiefsten ist.

16. Verbindungsstelle nach einem der vorhergehenden Ansprüche, **gekennzeichnet durch**, mindestens einen Anschlag (75,77) zur Begrenzung des Bewegungsbereichs des Betätigungselements (25) und/oder des Spannschlüssels (81).

## Claims

1. A joint comprising two tool sections (3, 5), each having a respective flat surface (47, 49), one of said sections containing a cavity (9) and the other section a hollow projection (7) that can be at least partially inserted into the cavity (9) and comprising a tensioning unit (19) for generating a tensioning force, which can be used to press the flat surfaces (47, 49) of the tool sections (3, 5) against one another in a pre-stressed condition, wherein the tensioning unit (19) comprises an actuating device (21) and at least two tensioning bodies (43), which are housed in the interior of the projection (7) so that they can be displaced in axial and radial direction of the joint (1) and which when pre-stressed act on an inner tensioning shoulder (15) of the projection (7), and wherein, in the interior of the projection (7), the tensioning unit (19) comprises a piston (23), which can be displaced in the longitudinal direction of the joint (1) and which can be coupled to the actuating device (21) by means of a coupling unit (27, 29, 31) in such a way that in a first functional position of the actuating device (21), said piston adopts a tensioning position and in a second functional position of the actuating device (21) adopts a release position, and wherein the actuating device (21) comprises at least one rotatable actuating element (25), the rotational axis of which can be rotated about an angle of preferably 90° to the longitudinal axis (17) of the joint (1) and has an eccentric outer surface, which co-operates with the coupling unit in such a way that a rotation of the actuating element (25) causes an axial displacement of the piston (23), **characterized in that** the coupling unit encompasses a first coupling member (27), which interacts with the actuating device and which is displaced in axial direction in response to a rotation of the actuating element (25), and **in that** the coupling unit encompasses a second coupling member (29).

2. The joint according to claim 1, **characterized in that** the actuating element (25) encompasses an eccentric.

3. The joint according to claim 1, **characterized in that** the actuating element (25) encompasses an oval outer surface.

4. The joint according to any one of claims 1 to 3, **characterized in that** the coupling unit encompasses a third coupling member (31).

5. The joint according to claim 4, **characterized in that** the second coupling member (29) encompasses a pin, which interacts with the first coupling member (27) and with the piston (23) or with the third coupling member (31).

6. The joint according to claim 5, **characterized in that** the center axis of the pin runs substantially vertically to the longitudinal axis (17) of the joint (1).

7. The joint according to any one of the preceding claims 4 to 6, **characterized in that** the third coupling member (31) is embodied as coupling ring.

8. The joint according to any one of the preceding claims, **characterized in that** the first coupling member (27) is embodied as coupling element, which is oriented substantially parallel to the longitudinal axis (17) of the joint (1), and which is coupled to the actuating element (25) at its one end and to the pin at its other end, wherein it can be pivoted around the pin.

9. The joint according to any one of the preceding claims, **characterized in that** the actuating element (25) encompasses an engaging surface (51) for a wrench (81).

10. The joint according to claim 9, **characterized in that** the engaging surface (51) is provided on the outer side of the actuating element (25), which faces away from the longitudinal axis (17) of the joint (1).

11. The joint according to claim 9 or 10, **characterized in that** the wrench (81) is embodied in a forked manner and that a pre-stressing force is preferably applied to the wrench arms (83a, 83b) of the wrench (81).

12. The joint according to any one of the preceding claims, **characterized in that** provision is made for a locking groove (71), with which a projection, which originates from the wrench (81), engages.

13. The joint according to claim 12, **characterized in that**, at its one end, the locking groove (71) encompasses an insertion area (73), so that the wrench (81) can only be attached and removed in a certain position.

14. The joint according to claim 12 or 13, **characterized in that** the locking groove (71) encompasses areas of a varying depth.

15. The joint according to any one of the preceding claims 12 to 14, **characterized in that** the locking groove (71) is lowest at its other end (79).

16. The joint according to any one of the preceding claims, **characterized by** at least one stop (75, 77) for limiting the area of movement of the actuating element (25) and/or of the wrench (81).

## Revendications

1. Point de connexion avec deux outils partiels (3, 5) présentant chacun une surface plane (47, 49), parmi lesquels un présente un évidement (9) et un présente une saillie creuse (7) pouvant être introduite au moins partiellement dans l'évidement (9), et avec un dispositif de serrage (19) pour générer une force de serrage avec laquelle les outils partiels (3, 5) peuvent être pressés l'un contre l'autre à l'état verrouillé dans la région de leurs surfaces planes (47, 49), dans lequel le dispositif de serrage (19) comprend un dispositif d'actionnement (21) ainsi qu'au moins deux corps de serrage (43) qui sont logés de manière à pouvoir être déplacés à l'intérieur de la saillie (7) dans le sens axial et radial du point de connexion (1) et agissent à l'état verrouillé sur un épaulement de serrage interne (15) de la saillie (7), et dans lequel le dispositif de serrage (19) présente un piston (23) disposé à l'intérieur de la saillie (7), pouvant être déplacé dans la direction longitudinale du point de connexion (1) qui peut être accouplé par le biais d'un dispositif d'accouplement (27, 29, 31) au dispositif d'actionnement (21) de sorte qu'il est disposé dans une première position fonctionnelle du dispositif d'actionnement (21) dans sa position de serrage et dans une seconde position fonctionnelle du dispositif d'actionnement (21) dans sa position de desserrage, et dans lequel le dispositif d'actionnement (21) présent au moins un élément d'actionnement rotatif (25) dont l'axe de rotation peut être tourné d'un angle de préférence de 90° par rapport à l'axe longitudinal (17) du point de connexion (1) et présente une surface externe excentrique qui coopère avec le dispositif d'accouplement de sorte qu'une rotation de l'élément d'actionnement (25) entraîne un mouvement axial du piston (23), **caractérisé en ce que** le dispositif d'accouplement présente un premier organe d'accouplement (27) coopérant avec le dispositif d'actionnement qui est déplacé dans le sens axial lors d'une rotation de l'élément d'actionnement (25), et que le dispositif d'accouplement présente un deuxième organe d'accouplement (29).

2. Point de connexion selon la revendication 1, **caractérisé en ce que** l'élément d'actionnement (25) présente un excentrique.

3. Point de connexion selon la revendication 1, **caractérisé en ce que** l'élément d'actionnement (25) présente une surface externe ovale.

4. Point de connexion selon une des revendications 1 à 3, **caractérisé en ce que** le dispositif d'accouplement présente un troisième organe d'accouplement (31).

5. Point de connexion selon la revendication 4, **caractérisé en ce que** le deuxième organe d'accouplement (29) présente une goupille coopérant avec le premier organe d'accouplement (27) et avec le piston (23) ou avec le troisième organe d'accouplement (31).

6. Point de connexion selon la revendication 5, **caractérisé en ce que** l'axe médian de la goupille s'étend essentiellement perpendiculairement à l'axe longitudinal (17) du point de connexion (1).

7. Point de connexion selon une des revendications précédentes 4 à 6, **caractérisé en ce que** le troisième organe d'accouplement (31) est réalisé en tant qu'anneau d'accouplement.

8. Point de connexion selon une des revendications précédentes, **caractérisé en ce que** le premier organe d'accouplement (27) est réalisé en tant qu'élément d'accouplement qui est orienté essentiellement parallèlement à l'axe longitudinal (17) du point de connexion (1) et est accouplé à l'élément d'actionnement (25) à un de ses extrémités et à la goupille à son autre extrémité, dans lequel il peut être pivoté autour de la goupille.

9. Point de connexion selon une des revendications précédentes, **caractérisé en ce que** l'élément d'actionnement (25) présente une surface d'engrènement (51) pour une clé de serrage (81).

10. Point de connexion selon la revendication 9, **caractérisé en ce que** la surface d'engrènement (51) est prévue sur le côté externe de l'élément d'actionnement (25) détourné de l'axe longitudinal (17) du point de connexion (1).

11. Point de connexion selon la revendication 9 ou 10, **caractérisé en ce que** la clé de serrage (81) est réalisée en forme de fourchette et que les bras de clé (83a, 83b) de la clé de serrage (81) sont de préférence sollicités avec une force de précontrainte.

12. Point de connexion selon une des revendications précédentes, **caractérisé en ce qu'**une rainure de sûreté (71), dans laquelle une saillie provenant de la clé de serrage (81) s'engrène, est prévue.

13. Point de connexion selon la revendication 12, **caractérisé en ce que** la rainure de sûreté (71) présente une région d'introduction (73) à une de ses extrémités de sorte que la clé de serrage (81) ne peut être posée et retirée que dans une position déterminée.

14. Point de connexion selon la revendication 12 ou 13, **caractérisé en ce que** la rainure de sûreté (71) présente des régions de profondeur différente.

15. Point de connexion selon une des revendications précédentes 12 à 14, **caractérisé en ce que** la rainure de sûreté (71) est au plus profond à son autre extrémité (79).

16. Point de connexion selon une des revendications précédentes, **caractérisé par** au moins une butée (75, 77) pour limiter la plage de mouvement de l'élément d'actionnement (25) et/ou de la clé de serrage (81).
